# EUROPEAN PATENT APPLICATION

(11) **EP 3 751 484 A1**
(43) Date of publication of application: **16.12.2020**
(21) Application number: 19179488.2
(22) Date of filing: 11.06.2019
(51) Int. Cl.: G06Q 10/08, G06Q 10/00, G06Q 30/00, G06Q 50/32

(54) **METHOD FOR ORDERING A REPLACEMENT PACKAGING UNIT AS A REPLACEMENT FOR A DAMAGED PACKAGING UNIT**

(71) Applicant: BASF SE, 67056 Ludwigshafen am Rhein (DE)
(72) Inventor: FEIG, Mischa, 68169 Mannheim (DE)
(74) Representative: Ortlieb, Alexander

(57) **Abstract**

Method for ordering a replacement packaging unit as a replacement for a damaged packaging unit comprising the following steps: capturing (S10) at least one identification means of a damaged packaging unit that is assigned to the damaged packaging unit and which identifies the damaged packaging unit; transmitting (S20) the at least one identification means together with an order request for a replacement packaging unit; providing a packaging database (S30) in which at least information about the packaging units, the identification means assigned to the packaging units and the persons authorized to use the packaging units with respect to the captured identification means is included; performing a database search (S40) in the packaging database determining whether the order request was made by an authorized person with respect to the captured identification means; in case the order request was made by an authorized person with respect to the captured identification means, providing a replacement packaging unit (S60) for the damaged packaging unit, wherein in case the order request was made by an unauthorized person, refusing the order request (S70).

## Description

### FIELD OF THE INVENTION

The present invention relates to a method for ordering a replacement packaging unit as a replacement for a damaged packaging unit. The present invention also relates to a use of a packaging database in such a method.

### BACKGROUND OF THE INVENTION

Packaging units, such as cardboard boxes, are well known in the prior art and are often used to transport goods. Such packaging units are used in a wide variety of designs and sizes, and it is also known that they are made of different materials.

In modern goods traffic, the transported goods are often not transported directly from the sender to the recipient, but via a large number of intermediate stations. During transport or reloading, it can happen that a packaging unit is damaged and can no longer be used for further transport. In the case of particularly critical products, such as medical devices, agricultural products or the like, further transport with damaged packaging units is even disallowed. It is also known that such packaging units are provided with means of individualization, such as labels comprising one or more readable barcodes, in order to be able to individualize such packaging units and simplify their transport from sender to recipient. When a damaged packaging unit is replaced, an individual order for a new packaging unit is usually placed in order to replace the damaged packaging unit before the goods can be transported to the next location or to the recipient. In particular, if the transported good is a product that requires special packaging and/or special means of identification, *e*.*g*. security labels, such an exchange of the damaged packaging unit is comparatively faulty.

In view of this, it is found that a further need exists to simplify the handling in case a packaging unit gets damaged.

### SUMMARY OF THE INVENTION

In the view of the above, it is an object of the present invention to provide a method for simplifying the handling of the replacement of a damaged packaging unit. In particular, it is an object of the present invention to enable a safe, traceable and clearly assignable replacement of a damaged packaging unit.

These and other objects, which become apparent upon reading the following description, are solved by the subject matter of the independent claims. The dependent claims refer to preferred embodiments of the invention.

According to the invention, a method for ordering a replacement packaging unit as a replacement for a damaged packaging unit is provided, comprising at least the following steps:
- capturing at least one identification means of a damaged packaging unit that is assigned to the damaged packaging unit and which identifies the damaged packaging unit;
- transmitting the at least one identification means together with an order request for a replacement packaging unit;
- providing a packaging database in which at least information about packaging units, the identification means assigned to the packaging units and the persons authorized to use/order the packaging units is included;
- performing a database search in the packaging database determining whether the order request was made by an authorized person; and
- in case the order request was made by an authorized person, providing a replacement packaging unit for the damaged packaging unit, wherein in case the order request was made by an unauthorized person with respect to the transmitted identification means, refusing the order request.

In other words, the present invention proposes to send a replacement packaging unit when both the damaged packaging unit is identified by the at least one identification means and the authorization of the person ordering the replacement packaging unit has been confirmed by a database query. This ensures that a replacement packaging unit is only sent to persons who are authorized to call up the replacement packaging. In addition, it can be identified which packaging unit is involved so that a suitable replacement packaging unit can be provided. The replacement packaging unit can be an identical packaging unit or an equally or better suited alternative packaging unit. In this context, it should be noted that the present invention is not limited to providing an identical packaging unit. Moreover, it is also encompassed by the present invention that only parts of the damaged packaging unit are replaced, e.g. specific parts of the packaging unit itself and/or one or more of the identification means.

An identification means is any suitable means for identifying the damaged packaging unit, i.e. the identification means allows a damaged packaging unit to be assigned to a specific transport and/or shipping operation. In this context, it should also be noted that the present invention is not limited to a specific identification means.

The packaging database that is provided advantageously contains all the identification means that were assigned to a packaging unit during shipping. In addition, it is advantageous to include those persons from the transport chain who are authorized to have access to the packaging unit, whereby the group of persons can of course be restricted to particularly trustworthy persons.

As a result, the present invention provides a solution by which a method for simplifying the handling of the replacement of a damaged packaging unit is provided.

It is preferred that the method further comprises the steps of taking a photo of the damaged packaging unit, and that the photo of the damaged packaging unit is transmitted together with the order request. For example, the photo can be captured using a smartphone or the like, wherein before transmitting the photo of the damaged packaging unit, the photo can be displayed on a respective display device and can then be discarded and re-recorded or confirmed. To provide such a photo is particularly of advantage, since it confirms that the packaging unit is indeed damaged. Moreover, thereby it can be documented why the replacement packaging unit, *e.g.* a labelled cardboard box, is ordered. An unauthorized order request of a replacement packaging unit can thus also be excluded in this respect. Moreover, it is further preferred that such a photo has to be taken before a scanning or inputting of the identification means is allowed.

Preferably, the method further comprises the step of determining the number of identification means present on the damaged packaging unit. In this respect, it is preferred that the identification means is provided by means of at least a label arranged on the damaged packaging unit and which preferably comprises a machine-readable barcode. In this respect, it is further preferred that the label is a product label, a transport label and/or a track and trace label. For example, a damaged packaging unit may comprise a product label, a transport label and a track and trace label.

Preferably, the capturing of the at least one identification means is performed by reading means of a corresponding reading device, preferably by a barcode scanner. In an alternative, the capturing of the at least one identification means is provided by inputting an identification number in an input device, preferably by inputting an identification number in inputting means of a computer device, wherein the computer device is preferably a mobile computer device, a smartphone or a tablet.

It is preferred that in the packaging database also information about the numbers of identification means is included, in particular with which labels a specific packaging unit has been provided. Thus, respective inputs can be provided/scanned in a predetermined order such that no identification means is forgotten. For example, a product label and a transport label can each be scanned, entered manually via the article number or captured as a photo. The photo can be taken directly or an already taken photo can be uploaded. With respect to a track and trace label, it is possible to scan the complete string, for example a 2D barcode or optionally another code or barcode. The code can then divided into its components, *e*.*g*. its Global Trade Item Number (GTIN), the batch, the serial number, the production date, the expiration date or any customer-specific information and displayed on a display, *e*.*g*. of a smartphone. Alternatively, the string of a track and trace label can also be entered manually via a keyboard or a photo can be taken of the label. Also here, the photo can be taken directly or uploaded from a photo gallery. Alternatively or in addition, the capturing of the at least one identification means can also be performed by using an image recognition algorithm analyzing a photo of the damaged package unit, wherein the image recognition algorithm is preferably a machine-learning algorithm. In addition, such an image recognition algorithm may also be used for determining which replacement packaging unit has to be provided.

Preferably, a verification and/or approval step is performed before the order request is transmitted. For example, when the order request for a replacement packaging unit is prepared, an order request for a replacement packaging unit is not sent directly to an executing company after entry, but first to another releaser. For example, this can be an employee in the same company or a superior department. Thereby, potential compliance requirements can be meet by reviewing the order request.

It is further preferred that the replacement packaging unit comprises at least one identification means also comprised by the damaged packaging unit, wherein it is preferred that the product label and the transport label are identical, and wherein it is preferred that the track and trace label has a different serial number. In this respect, a query step can be provided asking whether a product label, a transport label and/or a track and trace label should be provided on the replacement packaging unit. Thus, the replacement package unit may comprise different, more or less identification means.

Preferably, the method further comprises the step of generating order/damage data configured to be used in an order system, wherein the order/damage data preferably comprises at least a photo of the damaged packaging unit and data with respect to the ordered replacement packaging unit. Thereby, an order/damage overview of all components including a damage photo can be provided to a user. Moreover, it is preferred that all components including the damage photo can be adapted, deleted or supplemented again in such an order/damage overview. In addition, it is also possible that further comments can be added to the order/damage. Notably, the order/damage overview can also be provided together with an order request. For each damage/order, a damage report can be provided, which can be provided to an user, for example at the end of each month together with the respective invoice. Such an damage report might include the damage photos, the order details, the users, the country, the delivered components including the used batches of cardboard and labels.

It is preferred that the method is executed on at least one computer device, wherein the computer device is preferably a mobile computer device, like a smartphone, a tablet or a mobile computer. For example, the present method can be implemented in a computer executable program, like an application software (App) executable on a smartphone. Notably, it is possible that all above method steps are performed on a mobile computer device, wherein in this case, it is preferred that the packaging database is also provided on the mobile computer device. However, in this case it is preferred that the packaging database is individualized and limited, i.e. in this case the packaging database only contains information with respect to the packaging units assigned to a respective person or company.

Finally, the present invention also relates to the use of a packaging database in a method as explained above wherein the packaging database comprises at least information about the packaging units, the identification means assigned to the packaging units and the persons authorized to use the packaging units.

### BRIEF DESCRIPTION OF THE DRAWINGS

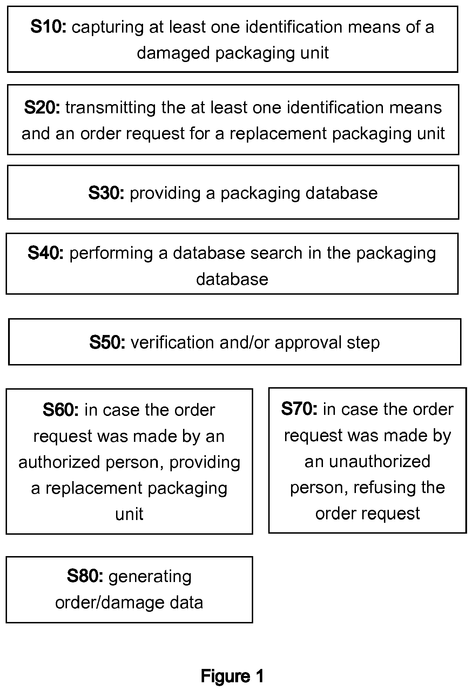

In the following, the invention is described exemplarily with reference to the enclosed figure, in which
- Figure 1: is a schematic view of a method according to the preferred embodiment of the present invention.

### DETAILED DESCRIPTION OF EMBODIMENT

Figure 1 is a schematic view of a method according to the preferred embodiment of the present invention. In the following, an exemplary order of the steps according to the present invention is explained. However, the provided order is not mandatory, *i.e.* all or several steps may be performed in a different order or simultaneously. It is preferred that the method is executed on at least one computer device, like a smartphone, a tablet or a mobile computer. For example, the present method can be implemented in a computer executable program, like an application software (App) executable on a mobile computer, like a smartphone.

In a step S10, at least one identification means of a damaged packaging unit that is assigned to the damaged packaging unit and by which the damaged packaging unit can be identified is captures. The damaged packaging unit is, for example, a cardboard box. In the preferred embodiment, the identification means are provided by means of at least a label arranged on the damaged packaging unit and which preferably comprises a machine-readable barcode. In this respect, it is further preferred that the label is a product label, a transport label and/or a track and trace label. For example, in an embodiment, the damaged packaging unit may comprise a product label, a transport label and a track and trace label. The capturing of the at least one identification means is preferably performed by reading means of a corresponding reading device, preferably by a barcode scanner. Alternatively, the capturing of the at least one identification means can also be provided by inputting an identification number in an input device, preferably by inputting an identification number in inputting means of a computer device, wherein the computer device is preferably a mobile computer device, a smartphone or a tablet. For example, a product label and a transport label can each be scanned, entered manually via the article number or captured as a photo. The photo can be taken directly or an already taken photo can be uploaded. With respect to a track and trace label, it is possible to scan the complete string, for example a 2D barcode or optionally another code or barcode. The code can then divided into its components, *e*.*g*. its Global Trade Item Number (GTIN), the batch, the serial number, the production date, the expiration date or any customer-specific information and displayed on a display, *e*.*g*. of a smartphone. Alternatively, the string of a track and trace label can also be entered manually via a keyboard or a photo can be taken of the label. Also here, the photo can be taken directly or uploaded from a photo gallery. Alternatively or in addition, the capturing of the at least one identification means can also be performed by using an image recognition algorithm analyzing a photo of the damaged package unit, wherein the image recognition algorithm is preferably a machine-learning algorithm.

In a step S20, at least the one identification means together with an order request for a replacement packaging unit and/or an order request for specific parts of the damaged packaging unit, e.g. one or more specific identification means, is transmitted to an ordering system. In this respect, it is further preferred that also a photo of the damaged packaging unit is transmitted together with the order request. For example, the photo can be captured using a smartphone or the like, wherein before transmitting the photo of the damaged packaging unit, the photo can be displayed on a respective display device and can then be discarded and re-recorded or confirmed. To provide such a photo is particularly of advantage, since it confirms that the packaging unit is indeed damaged. Moreover, thereby it can be documented why the replacement packaging unit, *e.g.* a labelled cardboard box, is ordered. An unauthorized order request of a replacement packaging unit can thus also be excluded in this respect.

In a step S30, a packaging database in which at least information about the packaging units, the identification means assigned to the packaging units and the persons authorized to use the packaging units is included is provided. In this respect, it is preferred that the packaging database contains all the identification means that were assigned to a packaging unit during shipping. In addition, it is advantageous to include all those persons from the transport chain who are authorized to have access to the packaging unit, whereby the group of persons can of course be restricted to particularly trustworthy persons. It is further preferred that in the packaging database also information about the numbers of identification means is included, in particular with which labels a packaging unit has been provided. Thus, respective inputs can be provided/scanned in a predetermined order such that no identification means is forgotten. In a step S40, a database search in the packaging database determining whether the order request was made by an authorized person with respect to the captured identification means is performed.

In a step S50, a verification and/or approval step is performed before the order request is transmitted. For example, when the order request for a replacement packaging unit is prepared, an order request for a replacement packaging unit may not be sent directly to an executing company after entry, but first to another releaser. For example, this can be an employee in the same company or a superior department. Thereby, potential compliance requirements can be meet by reviewing the order request.

In steps S60 and S70 it is decided whether or not the order request was made by an authorized person. In case the order request was made by an authorized person with respect to the captured identification means, a replacement packaging unit for the damaged packaging unit is provided, wherein in case the order request was made by an unauthorized person, the order request is refused. Notably, the replacement packaging unit can be an identical packaging unit or an equally or better suited alternative packaging unit. In this context, it should be noted that the present invention is not limited to providing an identical packaging unit. Moreover, the replacement packaging unit may comprise at least one identification means also comprised by the damaged packaging unit, if at hand, it is preferred that at least the product label and the transport label are identical, wherein it is preferred that the track and trace label has a different serial number. In this respect, a query step can be provided asking whether a product label, a transport label and/or a track and trace label should be provided on the replacement packaging unit. Thus, the replacement package unit may comprise different, more or less identification means.

In a step S80, generating order/damage data configured to be used in an order system is provided, wherein the order/damage data preferably comprises at least a photo of the damaged packaging unit and data with respect to the ordered replacement packaging unit. Thereby, an order/damage overview of all components including a damage photo can be provided to a user. Moreover, it is preferred that all components including the damage photo can be adapted, deleted or supplemented again in such an order/damage overview. In addition, it is also possible that further comments can be added to the order/damage. Notably, the order/damage overview can also be provided together with an order request. For each damage/order, a damage report can be provided, which can be provided to an user, for example at the end of each month together with the respective invoice. Such an damage report might include the damage photos, the order details, the users, the country, the delivered components including the used batches of cardboard and labels.

The present invention has been described in conjunction with a preferred embodiment as examples as well. However, other variations can be understood and effected by those persons skilled in the art and practicing the claimed invention, from the studies of the drawings, this disclosure and the claims.

Notably, in particular the steps S10 to S80 can be performed in any order, i.e. the present invention is not limited to a specific order of these steps. Moreover, it is also not required that the different steps are performed at a certain place or at one place, i.e. each of the steps may be performed at a different place using different equipment/data processing units. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

### REFERENCE SIGNS

- **S10**: capturing at least one identification means of a damaged packaging unit
- **S20**: transmitting the at least one identification means and an order request for a replacement packaging unit
- **S30**: providing a packaging database
- **S40**: performing a database search in the packaging database
- **S50**: verification and/or approval step
- **S60**: in case the order request was made by an authorized person, providing a replacement packaging unit
- **S70**: in case the order request was made by an unauthorized person, refusing the order request
- **S80**: generating order/damage data

## Claims

1. Method for ordering a replacement packaging unit as a replacement for a damaged packaging unit comprising the following steps:
capturing (S10) at least one identification means of a damaged packaging unit that is assigned to the damaged packaging unit and which identifies the damaged packaging unit;
transmitting (S20) the at least one identification means together with an order request for a replacement packaging unit;
providing a packaging database (S30) in which at least information about the packaging units, the identification means assigned to the packaging units and the persons authorized to use the packaging units with respect to the captured identification means is included;
performing a database search (S40) in the packaging database determining whether the order request was made by an authorized person with respect to the captured at least one identification means;
in case the order request was made by an authorized person, providing a replacement packaging unit (S60) for the damaged packaging unit, wherein in case the order request was made by an unauthorized person with respect to the captured identification means, refusing the order request (S70).

2. Method according to claim 1, wherein the method further comprises the steps of taking a photo of the damaged packaging unit, and transmitting the photo of the damaged packaging unit together with the order request.

3. Method according to claim 1 or 2, wherein the method further comprises the step of determining the number of identification means present on the damaged packaging unit.

4. Method according to any one of the preceding claims, wherein the identification means is provided by means of at least a label arranged on the damaged packaging unit and which preferably comprises a machine-readable barcode.

5. Method according to claim 4, wherein the label is a product label, a transport label and/or a track and trace label, wherein it is preferred that the damaged packaging unit comprises a product label, a transport label and a track and trace label.

6. Method according to any one of the preceding claims, wherein the capturing of the at least one identification means is performed by reading means of a corresponding reading device, preferably by a barcode scanner.

7. Method according to any one of the preceding claims, wherein the capturing of the at least one identification means is provided by inputting an identification number in an input device, preferably by inputting an identification number in inputting means of a computer device, wherein the computer device is preferably a mobile computer device, a smartphone or a tablet.

8. Method according to any one of the preceding claims, wherein the capturing of the at least one identification means is performed by using an image recognition algorithm analyzing a photo of the damaged package unit, wherein the image recognition algorithm is preferably a machine-learning algorithm.

9. Method according to any one of the preceding claims, wherein a verification and/or approval step (S50) is performed before the order request is transmitted, wherein the replacement packaging unit is preferably identical to the damaged packaging unit..

10. Method according to any one of the preceding claims, wherein the replacement packaging unit comprises at least one identification means also comprised by the damaged packaging unit, wherein it is preferred that the product label and the transport label are identical, and wherein it is preferred that the track and trace label has a different serial number.

11. Method according to any of the preceding claims, wherein the packaging unit is a cardboard box.

12. Method according to any one of the preceding claims, wherein the method further comprises the step of generating order and/or damage data (S80) configured to be used in an order system, wherein the order and/or damage data preferably comprises at least a photo of the damaged packaging unit and data with respect to the ordered replacement packaging unit.

13. Method according to one of the preceding claims, wherein the method is executed on at least one computer device, wherein the computer device is preferably a mobile computer device, like a smartphone, a tablet or a mobile computer.

14. Use of a packaging database in a method according to any one of the claims 1 to 13 in which at least information about the packaging units, the identification means assigned to the packaging units and the persons authorized to use the packaging units is included.

15. Method for delivering a replacement packaging unit as a replacement for a damaged packaging unit comprising the following steps:
receiving at least one identification means together with an order request for a replacement packaging unit; wherein the at least one identification means is assigned to a damaged packaging unit and which identifies the damaged packaging unit;
performing a database search in a packaging database determining whether the order request was made by an authorized person with respect to the received order request, wherein the packaging database comprises information at least about the about the packaging units, the identification means assigned to the packaging units and the persons authorized to use the packaging units with respect to the captured identification means is included
in case the order request was made by an authorized person, providing a replacement packaging unit for the damaged packaging unit, wherein in case the order request was made by an unauthorized person with respect to the captured identification means, refusing the order request.
